Europäisches Patentamt

European Patent Office

Office européen des brevets

(11) Veröffentlichungsnummer: **0 446 884 A2**

(12) **EUROPÄISCHE PATENTANMELDUNG**

(21) Anmeldenummer: 91103814.9

(51) Int. Cl.5: **H04Q 11/04**, H04Q 3/00

(22) Anmeldetag: **13.03.91**

(30) Priorität: **16.03.90 DE 4008450**

(43) Veröffentlichungstag der Anmeldung:
**18.09.91 Patentblatt 91/38**

(84) Benannte Vertragsstaaten:
**FR GB IT NL SE**

(71) Anmelder: **TELENORMA GMBH**
**Mainzer Landstrasse 128-146**
**W-6000 Frankfurt/Main(DE)**

(72) Erfinder: **Lauer, Walter, Dipl.-Ing.**
**Emmrich-Josef-Strasse 52**
**W-6230 Frankfurt - Höchst(DE)**
Erfinder: **Petri, Udo, Dipl.-Ing.**
**Baumgartenstrasse 18**
**W-6204 Taunusstein 4(DE)**
Erfinder: **Pönitz, Gerd, Dipl.-Ing.**
**Teutonenweg 3A**
**W-6057 Dietzenbach(DE)**

(54) **Schaltungsanordnung zur Signal- und Informationsumsetzung zwischen analog betriebenen Verbindungsleitungen und digital betriebenen Anschlussorganen in Kommunikations-Vermittlungsanlagen.**

(57)
1. Schaltungsanordnung zur Signal- und Informationsumsetzung zwischen analog betriebenen Verbindungsleitungen und digital betriebenen Anschlußorganen in Kommunikations-Vermittlungsanlagen.

2.1 Alle auf einer analog betriebenen Verbindungsleitung zu empfangenden und zu sendenden Signale, Kennzeichen und Nutzinformationen sollen durch eine einzige dezentrale Steuereinrichtung so umgesetzt werden können, daß diese Verbindungsleitung mit einem digital betriebenen Anschlußorgan verbunden werden kann. Dabei sollen sowohl außerhalb des Sprachfrequenzbandes als auch innerhalb des Sprachfrequenzbandes liegende Kennzeichen und Signalisierungen in beiden Richtungen umgesetzt werden können.

2.2 Für die außerhalb des Sprachfrequenzbandes auszutauschenden Schaltkriterien und Kennzeichen sind Leitungsschnittstellen vorgesehen, welche direkt mit der zuständigen dezentralen Steuereinrichtung verbunden sind. Ein digitaler Signalprozessor ist über eine Gabelschaltung und Wandlerschaltungen in den Sprechweg eingeschleift und arbeitet mit der Steuereinrichtung zusammen. Die Steuereinrichtung steuert mit Hilfe des Signalprozessors eine digitale Abschlußschnittstelle so an, daß Nutzkanäle und mindestens ein Signalisierungkanal gebildet werden.

2.3 Mit dieser Schaltungsanordnung können Vermittlungsanlagen unterschiedlicher Betriebsart miteinander verbunden werden. Eine analoge Verbindungsleitung kann mit einem digital betriebenen Anschlußorgan verbunden werden, und eine digital betriebene Verbindungsleitung kann bei entsprechender Ausführung der Schaltungsanordnung auch mit einem analog betriebenen Anschlußorgan zusammengeschaltet werden. Da die dezentrale Steuereinrichtung und der Signalprozessor nur jeweils für wenige Leitungen zuständig ist, können individuelle Anpassungen so vorgesehen werden, wie sie für den jeweiligen Leitungstyp optimal sind.

EP 0 446 884 A2

Die Erfindung betrifft eine Schaltungsanordnung zur Signal - und Informationsumsetzung zwischen analog betriebenen Verbindungsleitungen und digital betriebenen Anschlußorganen in Kommunikations-Vermittlungsanlagen nach dem Oberbegriff des Patentanspruchs 1.

Ein Verfahren zur Steuerung von Schaltkennzeichen und Schaltzuständen auf Verbindungsleitungen ist aus der DE-AS 29 19 617 bekannt. Dort wird eine dezentrale Steuerung beschrieben, die für mehrere Verbindungsleitungen zuständig ist und außerhalb des Sprachfrequenzbandes liegende Schaltkennzeichen steuert, die über die Verbindungsleitung zu empfangen und zu senden sind. Diese periphere Steuereinrichtung arbeitet mit einer Abtasteinrichtung und Speichern zusammen, wo die jeweiligen Verbindungszustände und die Eigenschaften der Verbindungsleitungen abgelegt sind. Das Steuern von zu sendenden Tonsignalen und das Auswerten von empfangenen Tonfrequenzen kann von einer derartigen Steuereinrichtung nicht durchgeführt werden.

Aus der DE-PS 30 14 572 ist eine Schaltungsanordnung zum Senden von Niederfrequenzsignalen auf Verbindungsleitungen in Fernsprechvermittlungsanlagen bekannt. Es sind matrixförmig aufgebaute Koppelbausteine vorgesehen, womit zentral erzeugte, im Sprachfrequenzband liegende Signale auf die Verbindungsleitung geschaltet werden. Hierfür ist jeweils eine dezentrale Steuerung vorgesehen, die für mehrere Verbindungsleitungen zuständig ist. Außerhalb des Sprachfrequenzbandes liegende Schaltkennzeichen lassen sich mit dieser Schaltungsanordnung nicht steuern.

Die Aufgabe der Erfindung besteht darin, eine Schaltungsanordnung anzugeben, womit alle auf einer Verbindungsleitung zu empfangenden und zu sendenden Signale, Kennzeichen und Nutzinformationen durch eine einzige dezentrale Steuereinrichtung so umgesetzt werden können, daß eine analog betriebene Verbindungsleitung mit einem digital betriebenen Anschlußorgan verbunden werden kann.

Zur Lösung dieser Aufgabe ist eine Merkmalskombination vorgesehen, wie sie im Patentanspruch 1 angegeben ist.

Damit wird in vorteilhafter Weise erreicht, daß Vermittlungsanlagen unterschiedlicher Betriebsart miteinander verbunden werden können. Wenn eine analog betriebene Verbindungsleitung mit einem digital betriebenen Anschlußorgan verbunden werden kann, so bedeutet dies, daß nach diesem Schaltungsprinzip auch eine digital betriebene Verbindungsleitung mit einem analog betriebenen Anschlußorgan zusammengeschaltet werden kann. Da die dezentrale Steuereinrichtung und der digitale Signalprozessor nur jeweils für wenige Leitungen zuständig ist, können individuelle Anpassungen so vorgesehen werden, wie sie für den jeweiligen Leitungstyp optimal sind. In den Unteransprüchen sind zweckmäßige Weiterbildungen der Erfindung angegeben.

Ein Ausführungsbeispiel der Erfindung wird nachfolgend anhand einer Zeichnung näher erläutert.

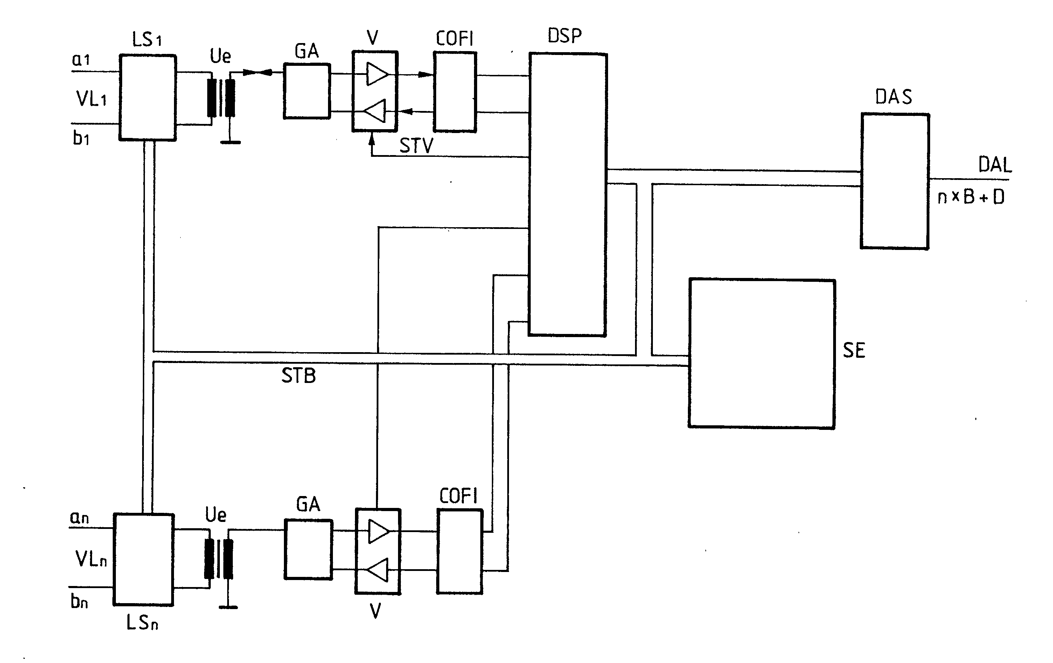

In der Zeichnung ist dargestellt, wie analog betriebene Verbindungsleitungen VL1 - VLn mit ihren Adern a1/b1, bzw. an/bn zunächst über Leitungsschnittstellen LS1, LSn geführt und mit Übertragern UE abgeschlossen sind. Die Leitungsschnittstellen LS sind über ein Steuerleitungsbündel STB direkt mit einer peripheren Steuereinrichtung SE verbunden, die für mehrere Verbindungsleitungen zuständig ist. In den Leitungsschnittstellen LS befinden sich Sende- und Empfangseinrichtungen für alle Signale und Kennzeichen, die außerhalb des Sprachfrequenzbandes auszutauschen sind. Dabei handelt es sich um Gleichstromsignale, also um das Bilden und Unterbrechen von Gleichstromschleifen, so wie das An- und Abschalten von Gleichspannungen und von niederfrequenten Wechselspannungen, die als Anruf- und/oder Belegungssignal dienen.

Der Sprechweg ist jeweils vom Übertrager Ue ausgehend zu einer Gabelschaltung GA geführt und verläuft über eine Verstärkeranordnung V zu den Wandlerschaltungen COFI, wo in bekannter Weise eine Analog- Digital-Wandlung, bzw. eine Digital-Analog-Wandlung der Sprachsignale stattfindet. Eine entsprechende Wandlung geschieht auch mit Signalisierungskennzeichen, welche als Töne über die Verbindungsleitung VL gesendet und empfangen werden. Die digitalen Eingänge und Ausgänge der Wandlerschaltungen COFI sind mit entsprechenden Ausgängen und Eingängen des digitalen Signalprozessors DSP verbunden.

Ein gemeinsames Steuerleitungsbündel STB verbindet den digitalen Signalprozessor DSP mit der Steuereinrichtung SE, den Leitungsschnittstellen LS und einer digitalen Abschlußschnittstelle DAS, von wo aus eine digital betriebene Anschlußleitung DAL zu einem Anschlußorgan führt. Diese digitale Anschlußleitung DAL kann sehr kurz sein, wenn das digitale Anschlußorgan sich in der gleichen Vermittlungsanlage cder sogar innerhalb der gleichen Baugruppe befindet, wie die zur analog betriebenen Verbindungsleitung VL gehörende Übertragung, also der hier beschriebenen Schaltungsanordnung.

Anhand von einigen Funktionsbeispielen soll nun die Arbeitsweise der gesamten Schaltungsanordnung beschrieben werden.

Wenn über die analoge Verbindungsleitung VL ein Belegungs- oder Anrufsignal eintrifft, so wird dies von der zuständigen Leitungsschnittstelle LS zunächst erkannt und über das Steuerleitungsbündel STB zur Steuereinrichtung SE gemeldet. Daraufhin wird eine digitale Meldung erzeugt, und die digitale Abschlußschaltung DAS wird beauftragt, im Rahmen des Signalisierungskanals D eine Belegungsmeldung zum digitalen Anschlußorgan zu senden. Außerdem wird der digitale Signalprozessor aktiviert, so daß er in der Lage ist, über die Verbindungsleitung VL eintreffende Tonfrequenzsignale zu empfangen und auszuwerten. Wenn es sich dabei um tonfrequente Wahlinformation handelt, so wird diese ziffernweise vom digitalen Signalprozessor DSP erkannt, und es werden jeweils in Zusammenarbeit mit der Steuereinrichtung SE Signalisierungsmeldungen zusammengestellt, welche über die digitale Abschlußschnittstelle DAS zum digitalen Anschlußorgan gelangen.

Wenn die digitale Vermittlungsanlage den Zustand eines gewünschten Teilnehmeranschlusses überprüft hat, so werden im Signalisierungskanal D entsprechende Meldungen empfangen, welche von der digitalen Abschlußschnittstelle DAS empfangen und an die Steuereinrichtung SE weitergegeben werden. Daraufhin wird der Signalprozessor DSP beauftragt, entsprechende Tonfrequenzen digital zu generieren, so daß über die Wandlerschaltungen COFI ein Tonfrequenzsignal als Frei- oder Besetztzeichen abgegeben wird.

Wenn der gewünschte Teilnehmer der digitalen Vermittlungsanlage frei ist und sich meldet, so empfängt die digitale Abschlußschnittstelle DAS ein entsprechendes Signal im Signalisierungskanal D. Daraufhin wird die Steuereinrichtung SE angereizt, so daß der Gesprächszustand eingestellt wird, wobei ein entsprechendes Kriterium je nach Ausführung der Verbindungsleitung VL über die Leitungsschnittstelle LS ausgesendet wird. Die im Gesprächszustand auszutauschenden Nutzsignale werden in den Wandlerschaltungen COFI Analog-Digital, bzw. Digital-Analog gewandelt und durchlaufen den Signalprozessor DSP. Die digitalen Signale werden zwischen dem Signalprozessor DSP und der Abschlußschnittstelle DAS ausgetauscht und in beiden Richtungen über die digitale Anschlußleitung DAL in einem Nutzdatenkanal B übertragen. In diesem Zustand ist der digitale Signalprozessor DSP in der Lage, zu erkennen, wenn über die analoge Verbindungsleitung VL Signalisierungskennzeichen in Form von Tonfrequenzen einlaufen. Außerdem sind in der Leitungsschnittstelle LS Empfängerschaltungen in Bereitschaft, so daß ein Gleichstromsignal erkannt werden kann, welches beispielsweise die Beendigung einer Gesprächsverbindung signalisiert. In diesem Fall wird in Zusammenarbeit mit der Steuereinrichtung SE ein Kennzeichen erzeugt, welches in der für digitale Anschlußorgane üblichen Form im Rahmen des Signalisierungskanals D zur digitalen Anschlußleitung DAL ausgesendet wird.

Eine von der digitalen Vermittlungsanlage aus aufgebaute Verbindung, welche als gehende Belegung der Verbindungsleitung VL ausgeführt werden soll, wird daran erkannt, daß von der digitalen Abschlußschnittstelle DAS über den Signalisierungskanal D eine entsprechende Meldung empfangen wird. Diese Meldung wird zur Steuereinrichtung SE weitergegeben, womit ein Schaltbefehl erzeugt wird, der über das Steuerleitungsbündel STB zur Leitungsschnittstelle LS gegeben wird. Von dort aus wird ein Belegungskriterium gebildet, welches beispielsweise in Form der Bildung einer Gleichstromschleife ausgesendet wird. Der Signalprozessor DSP wird in Empfangsbereitschaft versetzt, so daß aufgrund des Belegungskennzeichens einlaufende Wahlaufforderungssignale erkannt werden können. Über die analoge Verbindungsleitung VL einlaufende Antwort- oder Quittungssignale werden je nach ihrer Art entweder von der Leitungsschnittstelle LS oder vom digitalen Signalprozessor DSP erkannt.

Die in diesem Verbindungszustand über die Verbindungsleitung VL empfangenen Kennzeichen gelangen in entsprechend umgewandelter Befehlsform zur Steuereinrichtung SE, welche die digitale Abschlußschnittstelle DAS veranlaßt, eine entsprechende Signalisierungsmeldung im Signalisierungskanal D über die digitale Anschlußleitung DAL abzusenden. Die bei einer abgehenden Verbindung notwendigen Wahlinformationen werden über den Signalisierungskanal D empfangen und von der digitalen Abschlußschnittstelle zur Steuereinrichtung SE weitergegeben. Den Eigenschaften der Verbindungsleitung VL entsprechend werden daraus entweder von der Leitungsschnittstelle LS Gleichstromunterbrechungen in Impulsform erzeugt, oder es werden vom digitalen Signalprozessor DSP tonfrequente Wahlsignale nach dem Mehrfrequenzverfahren MFV generiert, welche analog gewandelt über den Sprechweg ausgesendet werden. Auch die nach dem Beendigen des Wahlvorgangs über die analoge Verbindungsleitung VL einlaufenden Kriterien werden je nach ihrer Art entweder von der Leitungsschnittstelle LS oder vom Signalprozessor DSP empfangen und über das Steuerleitungsbündel STB zur Steuereinrichtung SE weitergereicht. Daraufhin wird die digitale Abschlußschnittstelle DAS veranlaßt, das jeweils entsprechende Signalisierungswort über die digitale Anschlußleitung DAL auszusenden. Wenn auf diese Weise von der digitalen Verbindungsleitung VL ein Meldekriterium empfangen worden ist, so kommt die Gesprächsverbindung zustande.

Während einer bestehenden Gesprächsverbindung ist der digitale Signalprozessor DSP so eingestellt, daß er erkennt, welcher Anteil des jeweils gesendeten Nutzsignals von der Gabelschaltung GA durch Reflektion zurück übertragen wird. Daraufhin wird innerhalb des Signalprozessors DSP eine Kompensation wirksam, so daß die Funktion einer adaptiven Gabel erreicht wird.

Der Empfangspegel des ankommenden digitalisierten Nutzsignals wird jeweils bewertet und kann den Erfordernissen entsprechend so verstärkt werden, daß bei der Digitalisierung ein entsprechend höherer Pegel entsteht. In umgekehrter Richtung kann vom Signalprozessor DSP aus der Sendeverstärker innerhalb der Verstärkeranordnung V so eingestellt werden, daß ein für die Verbindungsleitung VL vorgegebener Pegel erreicht wird. Hierzu sind zwischen den Signalprozessor DSP und der Verstärkeranordnung V verlaufende Steuerleitungen STV vorgesehen.

Je nach Anzahl der Verbindungsleitungen VL1 - VLn, die einer Steuereinrichtung SE und einem Signalprozessor DSP zugeordnet sind, werden durch die digitale Abschlußschnittstelle DAS entsprechend viele Nutzdatenkanäle B gebildet. Im allgemeinen wird ein Signalisierungskanal D genügen, um das Verkehrsaufkommen von mehreren Verbindungsleitungen VL zu bewältigen. Die Anzahl der Nutzdatenkanäle B und der Signalisierungskanäle D richten sich auch danach, welche Art von digitalem Anschlußorgan in der digitalen Vermittlungsanlage vorgesehen ist. Falls aufgrund der Anzahl von Verbindungsleitungen VL mehr Nutzdatenkanäle B gebildet werden müssen, als auf einer digitalen Anschlußleitung DAL wegen des Typs von Anschlußorgan in der digitalen Vermittlungsanlage unterzubringen sind, so ist es auch möglich, an die digitale Abschlußschnittstelle DAS mehrere digitale Anschlußleitungen DAL anzuschließen.

**Patentansprüche**

1. Schaltungsanordnung zur Signal- und Informationsumsetzung zwischen analog betriebenen Verbindungsleitungen und digital betriebenen Anschlußorganen in Kommunikations-Vermittlungsanlagen, wobei dezentral angeordnete Steuereinrichtungen vorgesehen sind, um die auf der analog betriebenen Verbindungsleitung innerhalb und außerhalb des Sprachfrequenzbandes zu empfangenden und zu sendenden Schaltkriterien und Kennzeichen zu bearbeiten und weiterzuleiten,
dadurch gekennzeichnet,
daß für die außerhalb des Sprachfrequenzbandes auszutauschenden Schaltkriterien und Kennzeichen Leitungsschnittstellen (LS) vorgesehen sind, welche direkt mit der zuständigen dezentralen Steuereinrichtung (SE) verbunden sind,
daß für die innerhalb des Sprachfrequenzbandes auszutauschenden Kennzeichen ein digitaler Signalprozessor (DSP) über eine Gabelschaltung (GA) und Wandlerschaltungen (COFI) in den Sprechweg eingeschleift ist, welcher mit der Steuereinrichtung (SE) zusammenarbeitet,
und daß die Steuereinrichtung (SE) mit Hilfe des Signalprozessors (DSP) eine digitale Abschlußschnittstelle (DAS) so ansteuert, daß Nutzkanäle (B) und mindestens ein Signalisierungskanal (D) gebildet werden.

2. Schaltungsanordnung nach Anspruch 1, dadurch gekennzeichnet, daß die auf den Sprechweg von der analog betriebenen Verbindungsleitung (VL) ankommenden Hörtöne und tonfrequente Wahlinformationen vom Signalprozessor (DSP) empfangen und ausgewertet werden, und über ein Steuerleitungsbündel (STB) zur Steuereinrichtung (SE) gelangen, wo sie für die Abschlußschnittstelle (DAS) umgesetzt werden.

3. Schaltungsanordnung nach Anspruch 1, dadurch gekennzeichnet, daß die auf dem Sprechweg zur Verbindungsleitung (VL) zu sendenden Hörtöne und die Wahlinformationen vom Signalprozessor (DSP) in digitaler Form generiert werden aufgrund von Einstellbefehlen, die von der Steuereinrichtung (SE) erzeugt werden, wenn über die Abschlußschnittstelle (DAS) entsprechende Kriterien empfangen werden.

4. Schaltungsanordnung nach Anspruch 3, dadurch gekennzeichnet, daß beim Senden von Tonsignalen sowohl einfache Hörtöne oder Hörtonfolgen als auch Musikstücke und/oder Ansagen möglich sind, deren Strukturen parametrisch beschrieben innerhalb des Signalprozessors (DSP) abgelegt sind.

5. Schaltungsanordnung nach Anspruch 1, dadurch gekennzeichnet, daß der Signalprozessor (DSP) das von einem gesendeten Signal stammende reflektierte Signal kompensiert und damit die Funktion einer adaptiven Gabelschaltung (GA) digital nachbildet.

6. Schaltungsanordnung nach Anspruch 5, dadurch gekennzeichnet, daß nach erfolgter Einstellung der Gabelanpassung durch den Signalprozessor (DSP) eine Pegelbewertung eines empfangenen Signals stattfindet und ein Steuerkriterium (ST) gebildet wird, womit Verstärker, (V) gesteuert werden, die zwischen der Gabelschaltung (GA) und den Wandlerschaltungen (COFI) angeordnet sind.

7. Schaltungsanordnung nach Anspruch 1, dadurch gekennzeichnet, daß der Pegel eines zu sendenden Signals durch Programmierung des Signalprozessors (DSP) auf genormte Werte einstellbar ist.